# EUROPÄISCHE PATENTANMELDUNG

(11) **EP 4 295 656 A1**
(43) Veröffentlichungstag der Anmeldung: **27.12.2023**
(21) Anmeldenummer: 23168752.6
(22) Anmeldetag: 19.04.2023
(51) Int. Cl.: A01B 69/00

(54) **VERFAHREN ZUR OPTIMIERTEN KONFIGURATION EINES KAMERASYSTEMS ZUR REIHENERKENNUNG IN EINEM FELDBESTAND**

(30) Priorität: 22.06.2022 DE 102022115549
(71) Anmelder: CLAAS E-Systems GmbH, 49201 Dissen (DE)
(72) Erfinder: Jürschik, Peter, 33335 Gütersloh (DE); Lysgaard Andersen, Gert, 3450 Alleroed (DK); Jensen, Martin Falk, 2500 Valby (DK); Burchardi, Henrik, 2990 Nivaa (DK); Künnen, Tobias, 49479 Ibbenbüren (DE); Hagedorn, Simon, 49219 Glandorf (DE); Vilander, Jesper, 3480 Fredensborg (DK)
(74) Vertreter: CLAAS Gruppe

(57) **Zusammenfassung**

Die Erfindung betrifft ein Verfahren zur optimierten Konfiguration eines Kamerasystems (7) zur Reihenerkennung in einem Feldbestand (5) während einer Feldbearbeitung, wobei die Feldbearbeitung mittels einer landwirtschaftlichen Arbeitsmaschine (1) durchgeführt wird, wobei ein Kamerasystem (7) zur Aufnahme von Bilddaten vorgesehen ist, wobei das Kamerasystem (7) mindestens zwei Optiken (8) zur 3D-Erfassung des Feldbestandes (5) aufweist, wobei eine Steuereinheit (4) vorgesehen ist, wobei die Steuereinheit (4) die Bilddaten des Kamerasystems (7) in einer Reihenerkennungsroutine analysiert, wobei die Reihenerkennungsroutine eine kolorimetrische Analyseroutine (11) umfasst, wobei die Analyseroutine eine 3D-Analyseroutine (12) umfasst, wobei die kolorimetrische Analyseroutine (11) durch Kolorimetrie-Konfigurationsparameter an lokale Feldbedingungen anpassbar ist und wobei die 3D-Analyseroutine (12) durch 3D-Konfigurationsparameter an lokale Feldbedingungen anpassbar ist. Es wird vorgeschlagen, dass während der Feldbearbeitung Ergebnisse der kolorimetrischen Analyseroutine (11) und der 3D-Analyseroutine (12) zur Reihenerkennung kombiniert werden und dass die Kolorimetrie-Konfigurationsparameter und/oder die 3D-Konfigurationsparameter während der Feldbearbeitung und/oder über verschiedene Feldbearbeitungen mittels eines Lernverfahrens optimiert werden.

## Beschreibung

Die vorliegende Erfindung betrifft ein Verfahren zur optimierten Konfiguration eines Kamerasystems zur Reihenerkennung in einem Feldbestand gemäß dem Oberbegriff von Anspruch 1 sowie ein Kamerasystem gemäß Anspruch 13 sowie eine landwirtschaftliche Arbeitsmaschine gemäß Anspruch 14.

Im Rahmen der zunehmenden Automatisierung landwirtschaftlicher Arbeitsmaschinen werden diese inzwischen häufig mit Kameraanordnungen und anderen Sensoranordnungen ausgestattet, um den Bediener beim Fahren und bei der Verrichtung landwirtschaftlicher Arbeit zu unterstützen. Insbesondere können landwirtschaftliche Arbeitsaggregate der landwirtschaftlichen Arbeitsmaschine, d. h. Komponenten und Geräte, insbesondere Anbaugeräte, die zur Verrichtung oder Unterstützung landwirtschaftlicher Arbeit dienen, auf diese Weise überwacht und gesteuert werden.

Durch die Kameraanordnung wird ein Feldbestand, üblicherweise in Fahrtrichtung der landwirtschaftlichen Arbeitsmaschine, abgetastet und es werden Informationen über die Breite, Höhe und Tiefe von Objekten sowie zwischen Objekten generiert. Für eine präzise Steuerung ist eine möglichst genaue Erfassung von Pflanzenreihen, dem Abstand zwischen den Pflanzenreihen sowie die Unterscheidung zwischen Nutzpflanzen und Unkraut erforderlich, insbesondere, wenn diese annähernd die gleiche Wuchshöhe aufweisen. Um die Genauigkeit der Erfassung zu optimieren bzw. zu maximieren, sollte die Position der Kamera einerseits ausreichend nah an der Nutzpflanze sein, andererseits sollten möglichst viele Pflanzen und Pflanzenreihen durch die Kamera erfasst werden, um die einzelnen Pflanzenreihen trotz eventueller Fehlstellen robust erkennen zu können.

Kameraanordnungen zur Führung von landwirtschaftlichen Arbeitsmaschinen in Reihenkulturen sind bei mechanischen Unkrauthacken mittlerweile weit verbreitet im Einsatz. Solche Systeme identifizieren die Reihen einer Reihenkultur und steuern landwirtschaftliche Arbeitsmaschinen und/oder Anbaugeräte und/oder Arbeitsaggregate, zum Beispiel mechanische Unkrauthacken oder Feldspritzen, exakt über oder zwischen die Reihen. Bilddaten derartiger Kameraanordnungen können für kolorimetrische und dreidimensionale Analysen verwendet werden.

Bei kolorimetrischen Verfahren wird hier vereinfacht gesprochen zwischen Blättern (grünliche Pixel) und Boden (nicht grünliche Pixel) unterschieden. Bei dreidimensional arbeitenden Systemen werden die Höhenunterschiede zwischen Nutzpflanzen und Reihenzwischenraum ausgewertet.

Die Kameraanordnung nimmt Bilddaten umfassend die Pixel auf. Die aufgenommenen Pixelbilder werden über Bildverarbeitungssoftware verarbeitet und beispielsweise mit einem Template verglichen. Das Template definiert die geometrische Suchstruktur des Bestandes über bekannte oder messbare Parameter des Bestandes wie zum Beispiel Reihenabstand, Breite der Pflanzenreihe, Höhe der Pflanzen, Anzahl der Reihen im Blickfeld der Kamera, usw.

Für die Robustheit und Genauigkeit der Messung sind unter anderem bedeutend die Kamerahöhe und der Kamerawinkel, die die Beobachtungsfläche und damit die sichtbare Reihenzahl im Bild bestimmen, die Genauigkeit des Templates, das in der Regel von Hand an die tatsächlichen Bedingungen auf dem Feld angepasst wird und die Genauigkeit der Definition der kolorimetrischen Separation zwischen Bestand, Unkraut und Boden.

Da Kamerahöhe und Winkel sowie auch die Bestandshöhe einen erheblichen Einfluss darauf haben, wie das Kamerabild geometrisch auf den Boden projiziert wird, haben diese Einstellungen einen erheblichen Einfluss auf die Genauigkeit und Robustheit des Systems. In der täglichen Praxis erfolgen diese Einstellungen zu Beginn der Arbeiten und keineswegs immer optimal.

Bei dreidimensionalen, insbesondere stereoskopischen, Kamerasystemen erfolgt die Reihenerkennung auf der Grundlage der Höhenunterschiede zwischen in der Regel höheren Nutzpflanzen in den Reihen und den in der Regel niedrigeren Unkräutern zwischen den Reihen. Damit kann besser in stark verunkrauteten Beständen gearbeitet werden, bei denen der kolorimetrische Ansatz an seine Grenzen stößt.

Ein Verstellen der kolorimetrischen Einstellung durch den Bediener ist problematisch. Einerseits kann er zwar lokal bessere Ergebnisse erzielen. Andererseits unterscheiden sich Blattfarben und Bodenfarben innerhalb eines Schlages oft deutlich, was gerade in Grenzkonstellationen dazu führt, dass das System insgesamt schlechter funktioniert

Der bekannte Stand der Technik (EP 3 932 162 A1) von dem die Erfindung ausgeht, betrifft ein Verfahren gemäß dem Oberbegriff von Anspruch 1.

Es ist dabei eine Herausforderung, die Ergebnisse der Reihenerkennung unter Berücksichtigung der lokalen Gegebenheiten zu verbessern.

Der Erfindung liegt das Problem zugrunde, das bekannte Verfahren derart auszugestalten und weiterzubilden, dass hinsichtlich der genannten Herausforderung eine weitere Optimierung erreicht wird.

Das obige Problem wird durch die Merkmale des kennzeichnenden Teils von Anspruch 1 gelöst.

Wesentlich ist die grundsätzliche Überlegung, kolorimetrische und dreidimensionale, insbesondere stereoskopische, Analysen zu kombinieren und diese über die Zeit an die lokalen Gegebenheiten eines Feldes anzupassen. Somit werden die Vorteile der Kolorimetrie, dass auch sehr kleine Pflanzen erkannt werden können mit den Vorteilen der dreidimensionalen Analyse, dass diese unabhängig von der Blattfarbe und der Bodenfarbe ist, kombiniert. Die Nachteile der Kolorimetrie, dass diese bei starker Verunkrautung, speziellen Blattfarben und speziellen Bodenfarben schlechtere Ergebnisse erzielt und die Nachteile der dreidimensionalen Analyse, dass diese eine minimale Pflanzengröße und einen minimalen Höhenunterschied zwischen Nutzpflanzen und Unkraut benötigt, werden so abgefedert.

Weiterhin wird der Fahrer der landwirtschaftlichen Arbeitsmaschine von der Notwendigkeit, Konfigurationsparameter der dreidimensionalen und/oder kolorimetrischen Analysen (Kolorimetrie-Konfigurationsparameter und 3D-Konfigurationsparameter) selbst einzustellen, dadurch entlastet, dass diese automatisch angelernt werden.

Im Einzelnen wird vorgeschlagen, dass während der Feldbearbeitung Ergebnisse der kolorimetrischen Analyseroutine und der 3D-Analyseroutine zur Reihenerkennung kombiniert werden und dass die Kolorimetrie-Konfigurationsparameter und/oder die 3D-Konfigurationsparameter während der Feldbearbeitung und/oder über verschiedene Feldbearbeitungen mittels eines Lernverfahrens optimiert werden.

Bei einer bevorzugten Ausgestaltung gemäß Anspruch 2 führt die Steuereinheit in dem Lernverfahren eine Lernroutine durch, in der die Steuereinheit die Kolorimetrie-Konfigurationsparameter und/oder die 3D-Konfigurationsparameter optimiert. Besonders vorteilhaft ist die Möglichkeit, die jeweiligen Konfigurationsparameter basierend auf den Ergebnissen der jeweils anderen Analyseroutine zu optimieren. Funktioniert beispielsweise die Reihenerkennung über die 3D-Analyseroutine an einer Stelle des Feldes oder insgesamt besonders gut, kann dadurch die Kolorimetrie verbessert werden, bis ihre Ergebnisse ähnlich gut sind. Anschließend stehen zwei robuste Analyseroutinen zur Verfügung. Fährt die landwirtschaftliche Arbeitsmaschine nun beispielsweise in einen Feldabschnitt, in dem das Unkraut deutlich höher gewachsen ist, funktioniert möglicherweise immer noch die Kolorimetrie-Analyseroutine, auch, wenn die 3D-Analyseroutine versagt oder schlechtere Ergebnisse liefert.

Bei einer besonders bevorzugten Ausgestaltung gemäß Anspruch 3 ist vorgesehen, dass die Steuereinheit in der Lernroutine und/oder in der kolorimetrischen Analyseroutine und/oder der 3D-Analyseroutine ein trainiertes Maschinenlernmodell verwendet. Die Verwendung einer künstlichen Intelligenz ist besonders dann vorteilhaft, wenn ein wohldefiniertes Problem vorliegt, zu dem ausreichende Daten existieren und dessen Ein- und Ausgangsparameter sich innerhalb gewisser Grenzen bewegen. Genau das ist vorliegend der Fall. Gleichzeitig können in der Natur vielzählige unterschiedliche Kombinationen von Pflanzen, Pflanzeneigenschaften, Böden, Bodeneigenschaften, Wetterlagen, Lichtverhältnissen und dergleichen auftreten. Expertensysteme können bei derartigen vielfältigen Variationen an ihre Grenzen geraten.

Gemäß Anspruch 4 kann vorgesehen sein, dass das Maschinenlernmodell nachtrainiert wird. Bei jeder Feldbearbeitung können neue Daten gesammelt werden. Diese Daten sind für die weitere Verwendung des Kamerasystems bei demselben Nutzer oder im selben Umfeld relevanter als allgemeine Trainingsdaten. Das Nachtrainieren des Maschinenlernmodells bietet sich an, um mit vergleichsweise wenigen Daten feldspezifische oder allgemeiner umgebungsspezifische Variationen abzudecken und so ein individuelles Maschinenlernmodell zu erzeugen.

Herkömmlich werden viele Einstellungen optischer Systeme einmalig an einer einzigen Stelle des Feldes vorgenommen. Viele Parameter ändern sich jedoch über das Feld hinweg, beispielsweise Pflanzengrößen und Pflanzenhöhen, Bodenfarben, Blattfarben und dergleichen. Bei einer Ausgestaltung gemäß Anspruch 5 wird vorgeschlagen, dass die Lernroutine fortlaufend durchgeführt wird, sodass die Konfigurationsparameter an wechselnde Bedingungen angepasst werden.

Anspruch 6 gibt einige bevorzugte Konfigurationsparameter an, die in einer Initialisierungsroutine eingestellt werden können. Diese Konfigurationsparameter können insbesondere über die Feldbearbeitung konstant oder im Wesentlichen konstant bleiben. Nennenswert ist dabei auch, dass in der Initialisierungsroutine eine Ermittlung einer Reihenstruktur des Feldes durchgeführt werden kann. Dafür kann zum Beispiel eine Kamerahöhe mit einem Kamerawinkel kombiniert werden, die einen weiteren Überblick über das Feld ermöglichen, um so eine erste Reihenerkennung mit möglichst vielen Daten zu ermöglichen. Diese erste Reihenerkennung kann als Grundlage für die weitere Analyse der Bilddaten genutzt werden. Insbesondere können auf Basis dieser ersten Reihenerkennung die 3D-Konfigurationsparameter und/oder die Kolorimetrie-Konfigurationsparameter ermittelt oder optimiert werden. Beispielsweise kann eine Startkonfiguration ermittelt werden.

Die Ansprüche 7 bis 9 betreffen die Konfiguration und/oder Auswahl einer Separationsfunktion für die kolorimetrische Analyseroutine. Grundsätzlich funktioniert die Kolorimetrie darüber, dass insbesondere zwischen den Pflanzenpixeln und Bodenpixeln unterschieden wird. Diese Unterscheidung kann auf Basis statistischer Auswertungen und/oder mittels eines Maschinenlernmodells erfolgen. So oder so basiert die kolorimetrische Unterscheidung zwischen Pflanzenreihen und Boden und Unkraut auf der Bildung von Gruppen von Pixeln mit ähnlichen Spektraleigenschaften. Hierfür können nun ganz unterschiedliche Separationsfunktionen zum Einsatz kommen, die in unterschiedlichen Kontexten unterschiedlich gute Ergebnisse liefern.

Bei einer Ausgestaltung gemäß Anspruch 7 wird vorgeschlagen, dass die Konfiguration und/oder Auswahl der Separationsfunktion hinsichtlich eines Qualitätsindikators der Reihenerkennung optimiert wird. Ist beispielsweise die Reihenerkennung mittels der 3D-Analyseroutine zu einem Zeitpunkt besonders gut, kann dieser Zeitpunkt genutzt werden, um eine Separationsfunktion auszuwählen und zu konfigurieren, die auch unter widrigen Bedingungen, beispielsweise bei viel Unkraut oder selteneren Bodenarten, gute Ergebnisse liefert. Gegenüber der herkömmlich oft genutzten Bewertung von Separationsfunktionen über interne Parameter ohne externe Bewertung, beispielsweise über eine Standardabweichung, kann vorschlagsgemäß ein breiteres Spektrum an Anwendungsfällen abgedeckt werden.

Das vorschlagsgemäße Verfahren ermöglicht grundsätzlich die verbesserte Berücksichtigung lokaler Gegebenheiten wie dominanter Bodenfarben, Blattfarben, typischer regionaler Unkräuter und anderer feldspezifischer Besonderheiten. Besonders vorteilhaft ist nun auch die Möglichkeit, die Auswahl und/oder Konfiguration der Separationsfunktion, wie in Anspruch 8 vorgeschlagen, wiederzuverwenden. So kann beispielsweise über mehrere Feldbearbeitungen Stück für Stück die Separationsfunktion verbessert werden. Auch unterschiedliche Feldregionen können schrittweise abgegrenzt und berücksichtigt werden.

Gemäß Anspruch 9 kann vorgesehen sein, dass die Steuereinheit die Separationsfunktion in der Lernroutine fruchtartenspezifisch und/oder sortenspezifisch und/oder bodenartspezifisch ausfällt. So kann beispielsweise mittels Expertenwissens oder unterschiedlich trainierter Maschinenlernmodelle bereits ein guter Ausgangspunkt für das weitere Lernen gefunden werden.

Anspruch 10 betrifft die Möglichkeit, dass einige der Konfigurationsparameter des Kamerasystems die kolorimetrische Analyseroutine und die 3D-Analyseroutine betreffen. Andere können nur die eine oder nur die andere Analyseroutine betreffen.

Wie in Anspruch 11 beschrieben, können die Konfigurationsparameter jeweils hardwareseitige und/oder softwareseitige Konfigurationsparameter umfassen. Anspruch 11 nennt bevorzugte Konfigurationsparameter.

Anspruch 12 schließlich betrifft eine besonders interessante Möglichkeit, Belichtungsprobleme in der kolorimetrischen Analyseroutine anzugehen. Herkömmliche Belichtungsreihen kosten Zeit und vermindern die Framerate. Dies kann zu Problemen führen, wenn beispielsweise wandernde Schatten im Blickfeld des Kamerasystems auftauchen. Eine Lösung dafür ist, an den Optiken unterschiedliche Belichtungseinstellungen vorzusehen. Diese können kurzzeitig oder längerfristig bei der Feldbearbeitung, insbesondere auch über im Wesentlichen die gesamte Feldbearbeitung, vorgesehen werden. Durch die Kombination unterschiedlicher Belichtungseinstellungen an den Optiken werden für die Kolorimetrie deutlich aussagekräftigere Bilddaten erfasst.

Nach einer weiteren Lehre gemäß Anspruch 13, der eigenständige Bedeutung zukommt, wird ein Kamerasystem eingerichtet zur Verwendung in dem vorschlagsgemäßen Verfahren beansprucht.

Auf alle Ausführungen zu dem vorschlagsgemäßen Verfahren darf verwiesen werden.

Nach einer weiteren Lehre gemäß Anspruch 14, der ebenfalls eigenständige Bedeutung zukommt, wird eine landwirtschaftliche Arbeitsmaschine eingerichtet zur Verwendung in dem vorschlagsgemäßen Verfahren beansprucht.

Auf alle Ausführungen zu dem vorschlagsgemäßen Verfahren darf verwiesen werden.

Im Folgenden wird die Erfindung anhand einer lediglich ein Ausführungsbeispiel darstellenden Zeichnung näher erläutert. In der Zeichnung zeigt
- Fig. 1: eine Draufsicht auf eine landwirtschaftliche Arbeitsmaschine während der Durchführung des vorschlagsgemäßen Verfahrens,
- Fig. 2: a) eine Nahseitenansicht der Kameraanordnung, b) schematisch die Aufnahme dreidimensionaler Bilddaten, c) Pflanzenreihen.
- Fig. 3: schematisch die Reihenerkennungsroutine und ihren Kontext im vorschlagsgemäßen Verfahren

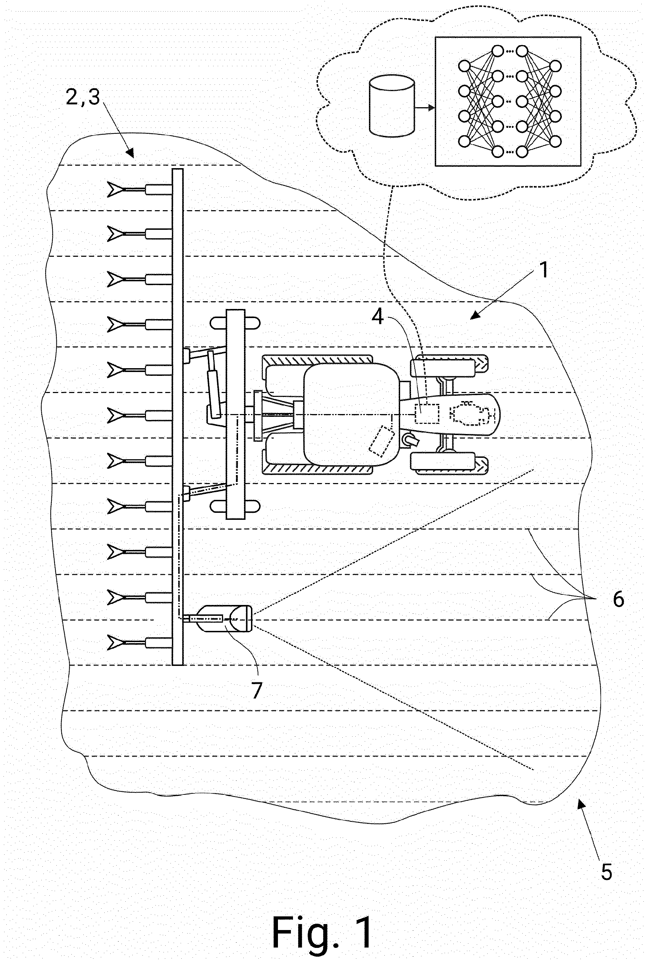

Die Darstellung in Fig. 1 zeigt eine schematische Draufsicht auf eine landwirtschaftliche Arbeitsmaschine 1 mit einem landwirtschaftlichen Arbeitsaggregat 2 in einer Betriebssituation, hier bei einer Feldbearbeitung. Die vorschlagsgemäße Lösung lässt sich auf einen weiten Bereich landwirtschaftlicher Arbeitsmaschinen 1, insbesondere selbstfahrender landwirtschaftlicher Arbeitsmaschinen 1, anwenden. Dazu gehören Zugmaschinen, insbesondere Traktoren. Bei dem dargestellten und insoweit bevorzugten Ausführungsbeispiel handelt es sich bei der landwirtschaftlichen Arbeitsmaschine 1 um einen Traktor, der in an sich üblicher Weise mit einem landwirtschaftlichen Arbeitsaggregat 2 in Form eines Anbaugeräts 3 ausgestattet ist. Bei dem landwirtschaftlichen Arbeitsaggregat 2 handelt es sich hier beispielsweise um eine mechanische Hacke oder um einen Grubber. Die Ausführungen zu einem Traktor bzw. zu einem solchen landwirtschaftlichen Arbeitsaggregat 2 gelten für alle anderen Arten von landwirtschaftlichen Arbeitsmaschinen 1 bzw. landwirtschaftlichen Arbeitsaggregaten 2 entsprechend.

Die landwirtschaftliche Arbeitsmaschine 1 und das landwirtschaftliche Arbeitsaggregat 2 werden von einer Bedienperson, dem Fahrer, bedient, wobei als Bedienerunterstützung eine Steuereinheit 4 mit einer Recheneinheit und einer Speichereinheit vorgesehen ist, welche beispielsweise die Geschwindigkeit und/oder den Lenkwinkel der landwirtschaftlichen Arbeitsmaschine 1 und/oder die Arbeitshöhe des landwirtschaftlichen Arbeitsaggregats 2, insbesondere vollautomatisch, steuern kann. Die Steuerung von landwirtschaftlicher Arbeitsmaschine 1 und/oder landwirtschaftlichem Arbeitsaggregat 2 durch die Steuereinheit 4 ermöglicht eine besonders präzise Bearbeitung eines eine Vielzahl von Nutzpflanzen umfassenden Feldbestandes 5. Beispielsweise kann mit dem hier dargestellten landwirtschaftlichen Arbeitsaggregat 2 in Form einer mechanischen Hacke oder eines Grubbers, der Boden zwischen den Nutzpflanzen besonders präzise und umfassend bearbeitet, beispielsweise aufgebrochen, werden, ohne die Nutzpflanzen dabei zu beschädigen. Der Bereich zwischen den Nutzpflanzen wird dabei besonders präzise erkannt, sogar dann, wenn dieser von unerwünschten Wildkräutern (Schadpflanzen) bewachsen ist. Insbesondere können Reihen 6 von Pflanzen mit mehreren Nutzpflanzen besonders exakt erkannt werden.

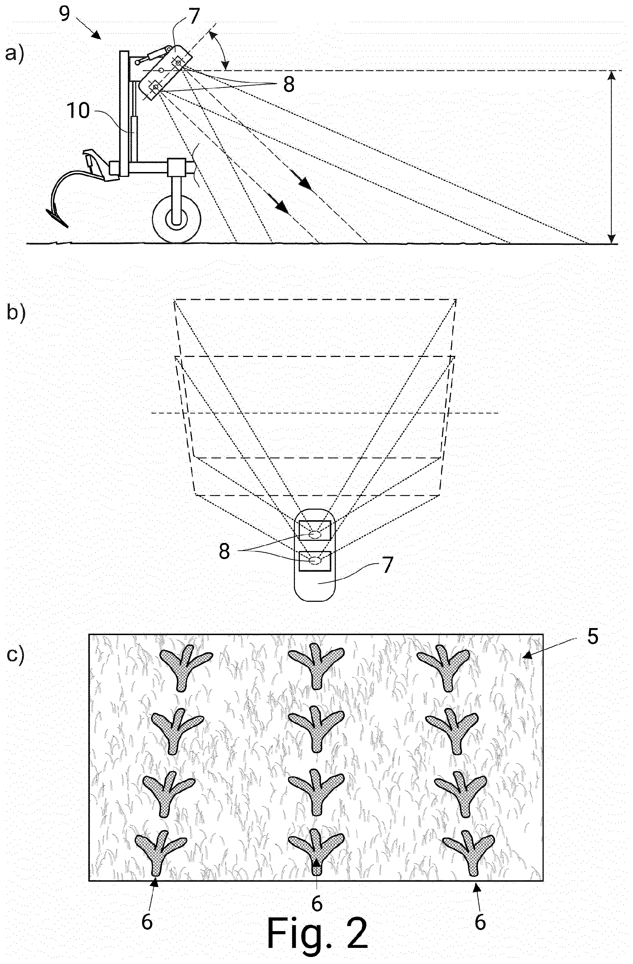

In Fig. 2a) ist eine Seitenansicht des landwirtschaftlichen Arbeitsaggregats 2 aus Fig. 1 dargestellt. Die landwirtschaftliche Arbeitsmaschine 1 weist ein Kamerasystem 7 mit zumindest einer Kamera auf, insbesondere mit einer 3D-Kamera, die hier und vorzugsweise eine Stereokamera mit zwei Optiken 8 ist. Die Kamera ist gemäß dem in den Figuren gezeigten Ausführungsbeispiel auf dem landwirtschaftlichen Arbeitsaggregat 2 montiert, kann aber grundsätzlich auch auf der landwirtschaftlichen Arbeitsmaschine 1 angeordnet werden, an der das Arbeitsaggregat 2 montiert ist. Die Kamera ist mittels eines Befestigungselementes 9 an dem Arbeitsaggregat 2 angeordnet. Die Befestigungselemente 9 sind als starre Stangen oder Streben ausgeführt, an denen die zumindest eine Kamera insbesondere höhenverstellbar angeordnet ist. Zur Höhenverstellung kann ein Linearaktor 10 vorgesehen sein. Der Linearaktor 10 kann beispielhaft als Hydraulikzylinder, als Pneumatikzylinder oder als elektromechanischer Linearantrieb ausgeführt sein. Der Linearaktor 10 kann durch die Steuereinheit 4 angesteuert werden.

Das jeweilige Kamerasystem 7 ist konfiguriert, mittels der Kamera den Feldbestand 5, d.h. die Nutzpflanzen bzw. Pflanzenreihen aus Nutzpflanzen, insbesondere in Fahrtrichtung vor dem landwirtschaftlichen Arbeitsaggregat 2, zu erfassen und entsprechende 3D-Informationen des Feldbestands 5 zu generieren, indem mit der Kamera stereoskopische Bildpaare entlang zweier verschiedener Blickachsen aufgenommen werden.

Das in den Figuren dargestellte und insoweit bevorzugte Ausführungsbeispiel betrifft ein Verfahren zur optimierten Konfiguration eines Kamerasystems 7 zur Reihenerkennung in einem Feldbestand 5 während einer Feldbearbeitung. Fig. 2c) zeigt schematisch derartige Reihen 6.

Bei der Feldbearbeitung kann es sich beispielsweise um ein Hacken oder Grubbern handeln. Die Feldbearbeitung wird mittels einer landwirtschaftlichen Arbeitsmaschine 1 durchgeführt. Die landwirtschaftliche Arbeitsmaschine 1 weist ein angebautes Arbeitsaggregat 2 zur reihenabhängigen Feldbearbeitung auf und/oder ist mit einem landwirtschaftlichen Anbaugerät 3 zur reihenabhängigen Feldbearbeitung verbunden.

Weiter ist ein Kamerasystem 7 zur Aufnahme von Bilddaten vorgesehen, das mindestens zwei Optiken 8 umfasst, die an der landwirtschaftlichen Arbeitsmaschine 1 oder dem Anbaugerät 3 oder dem Arbeitsaggregat 2 angeordnet sind und vorzugsweise in einer definierten Position zueinander montiert sind. Das Kamerasystem 7 weist die zwei Optiken 8 zur 3D-Erfassung des Feldbestandes 5 auf.

Es ist eine Steuereinheit 4 vorgesehen, die hier und vorzugsweise lokal auf der landwirtschaftlichen Arbeitsmaschine 1 angeordnet ist.

Die Steuereinheit 4 analysiert die Bilddaten des Kamerasystems 7 in einer Reihenerkennungsroutine, wobei die Reihenerkennungsroutine eine kolorimetrische Analyseroutine 11 umfasst, wobei die Analyseroutine eine 3D-Analyseroutine 12 umfasst, wobei die kolorimetrische Analyseroutine 11 durch Kolorimetrie-Konfigurationsparameter an lokale Feldbedingungen anpassbar ist und wobei die 3D-Analyseroutine 12 durch 3D-Konfigurationsparameter an lokale Feldbedingungen anpassbar ist.

Wesentlich ist nun, dass während der Feldbearbeitung Ergebnisse der kolorimetrischen Analyseroutine 11 und der 3D-Analyseroutine 12 zur Reihenerkennung kombiniert werden und dass die Kolorimetrie-Konfigurationsparameter und/oder die 3D-Konfigurationsparameter während der Feldbearbeitung und/oder über verschiedene Feldbearbeitungen mittels eines Lernverfahrens optimiert werden.

Die Kombination der Ergebnisse der kolorimetrischen Analyseroutine 11 und der 3D-Analyseroutine 12 zur Reihenerkennung kann auf ganz unterschiedliche Arten und Weisen erfolgen. Grundsätzlich können die Ergebnisse zusammengeführt werden, wobei beispielsweise das Ergebnis mit einem besseren Qualitätsindikator genutzt wird, aber auch komplexere Auswahlalgorithmen beispielsweise für einzelne Pixel sind möglich. Die Analyseroutinen können auch alternierend genutzt werden, wobei sie hier und vorzugsweise zumindest zeitweise, vorzugsweise über einen wesentlichen Teil der Feldbearbeitung, zeitgleich genutzt werden. Die Analyseroutinen können auch aufeinander aufbauen. Hier und vorzugsweise werden die Analyseroutinen zumindest teilweise unabhängig voneinander durchgeführt und dann vorzugsweise ihre Ergebnisse kombiniert.

Das Lernverfahren wird hier und vorzugsweise von der Steuereinheit 4 durchgeführt. Mit dem Begriff "optimiert" ist die Tätigkeit des Optimierens gemeint. Dabei muss nicht zwingend das optimale Ergebnis erzielt werden, es reicht, wenn nach einer Optimierungsvorschrift ein Qualitätsindikator oder dergleichen maximiert wird oder anderweitig eine Optimierung angestrebt wird.

Hier und vorzugsweise steuert die Steuereinheit 4 die landwirtschaftliche Arbeitsmaschine 1 und/oder das Arbeitsaggregat 2 und/oder das Anbaugerät 3 basierend auf einem Ergebnis der Reihenerkennungsroutine an. So kann die landwirtschaftliche Arbeitsmaschine 1 beispielsweise besser entlang der Reihen 6 gesteuert werden oder die Feldbearbeitung präziser ausgeführt werden, insbesondere indem das Arbeitsaggregat 2 auf die Reihen abgestimmt angesteuert wird.

Das vorschlagsgemäße Verfahren kann genutzt werden, um dauerhaft lokal bessere Ergebnisse bei spezifischen Feldeigenschaften wie Bodeneigenschaften und/oder Fruchtarten zu erzielen. Es kann auch genutzt werden, um bei einer Feldbearbeitung automatisch Optimierungen zu erzielen.

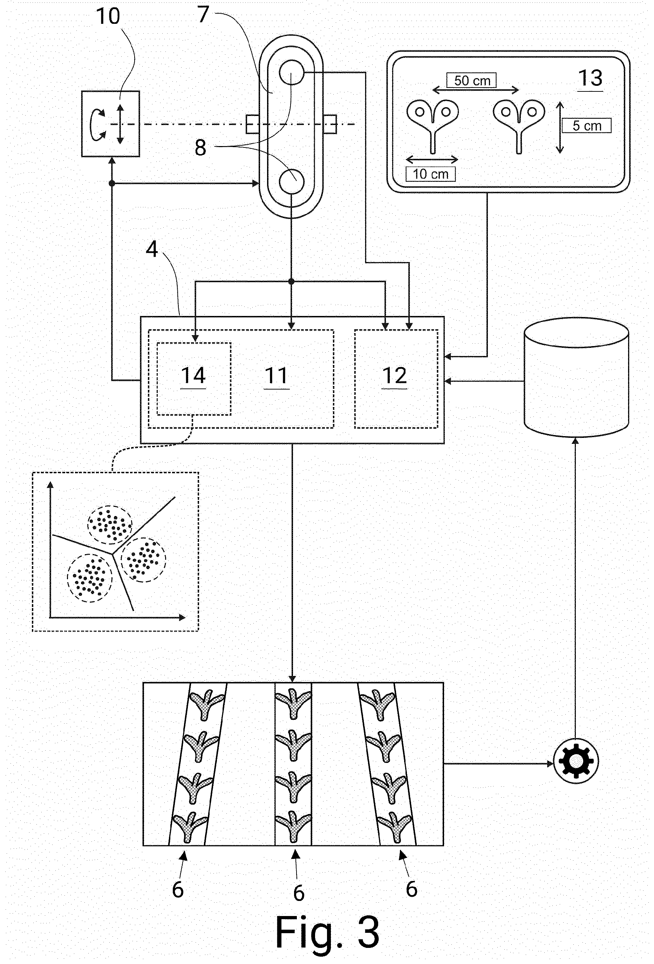

Das vorschlagsgemäße Verfahren wird durch Fig. 3 verdeutlicht, in der beispielhaft gezeigt ist, wie ein Template 13 und die Bilddaten der Optiken 8 Eingang in die 3-D-Analyseroutine und die kolorimetrische Analyseroutine 11 mit einer noch zu erläuternden Separationsfunktion 14 finden und so eine Reihenerkennung durchgeführt und Konfigurationsparameter für eine Verstellung der Höhe und des Winkels der Kamera-anordnung ermittelt werden.

Bei einer beispielhaften Ausführung des vorschlagsgemäßen Verfahrens wird angenommen, dass die 3D-Analyseroutine 12 bereits sehr gute Ergebnisse erzielt, die durch einen Qualitätsindikator quantifiziert und verifiziert werden können. Ein Ziel kann nun sein, die Robustheit der Reihenerkennung insgesamt auch bei höherer Verunkrautung, also dann, wenn die Unkrauthöhe sich an die Nutzbestandshöhe annähert, zu verbessern. In diesem Fall funktioniert die 3D-Analyseroutine 12 weniger gut.

Die Steuereinheit 4 kann nun eine Analyse der spektralen Signatur von Pixeln in den Reihen 6 durchführen. Dabei kann sie über ein bereits automatisch oder durch einen Nutzer erfasstes Template 13, das auf die Reihen 6 gematcht wurde, die Position der Nutzpflanzen ermitteln, sodass auch die spektrale Signatur der Nutzpflanzen erfasst werden kann. Somit kann ein lokal angepasstes kolorimetrisches Spektrum für die Nutzpflanzen erfasst werden.

Im Bereich zwischen den Reihen 6 kann zwischen grünen und nicht-grünen oder unterschiedlich grünen Pixeln unterschieden werden, wodurch kolorimetrische Spektren für Boden und Unkraut ermittelt werden können. Das so ermittelte Ergebnis kann in eine noch zu erläuternde Separationsfunktion 14 einfließen. Mittels statistischer Methoden kann die kolorimetrische Analyseroutine 11 konfiguriert werden.

Andersherum kann bei einer guten Erfassung mittels des kolorimetrischen Ansatzes die 3D-Analyseroutine 12 konfiguriert werden.

Hier und vorzugsweise ist vorgesehen, dass in dem Lernverfahren die Steuereinheit 4 eine Lernroutine durchführt, in der die Steuereinheit 4 die Kolorimetrie-Konfigurationsparameter und/oder die 3D-Konfigurationsparameter optimiert. Die Steuereinheit 4 ist hier und vorzugsweise zumindest teilweise, insbesondere vollständig, auf der landwirtschaftlichen Arbeitsmaschine 1 angeordnet und führt die Lernroutine auf lokaler Hardware durch.

Nun können zwei besonders interessante Möglichkeiten vorgesehen sein. Einerseits ist möglich, dass in der Lernroutine die Kolorimetrie-Konfigurationsparameter basierend auf Ergebnissen der 3D-Analyseroutine 12 optimiert werden. Andererseits ist möglich, dass in der Lernroutine die 3D-Konfigurationsparameter basierend auf Ergebnissen der kolorimetrische Analyseroutine 11 optimiert werden. Auf diese Art und Weise können die Analyseroutinen sich gegenseitig optimieren und ihre Stärken werden addiert.

Weiter ist hier und vorzugsweise vorgesehen, dass die Steuereinheit 4 in der Lernroutine ein trainiertes Maschinenlernmodell verwendet, um die Kolorimetrie-Konfigurationsparameter und/oder die 3D-Konfigurationsparameter zu optimieren, und/oder, dass die Steuereinheit 4 in der kolorimetrischen Analyseroutine 11 und/oder der 3D-Analyseroutine 12 ein trainiertes Maschinenlernmodell verwendet, um die Ergebnisse zu ermitteln.

Allgemein wird unter einem trainierten Maschinenlernmodell ein Maschinenlernmodell verstanden, das bereits in einem Trainingsverfahren auf den Anwendungsfall trainiert wurde und im einfachsten Fall während der Anwendung nicht mehr dazu lernt. Das trainierte Maschinenlernmodell weist einen Trainingsdatensatz, beispielsweise Gewichte von Neuronenverbindungen, und eine Anwendungsvorschrift auf. Die Anwendungsvorschrift beschreibt allgemein die zu verwendenden Rechenoperationen und der Trainingsdatensatz umfasst die in dem Trainingsverfahren ermittelten Parameter des Maschinenlernmodells wie die Gewichte und ggfs. gelernte Hyperparameter. Hier und vorzugsweise kommt zur Erstellung des trainierten Maschinenlernmodells ein Deep-Learning-Verfahren zum Einsatz. Der Trainingsdatensatz enthält also Konfigurationsparameter für die Anwendungsvorschrift, die im Rahmen der jeweiligen Routine ausgeführt wird.

Hier und vorzugsweise wird das in der kolorimetrischen Analyseroutine 11 und/oder der 3D-Analyseroutine 12 verwendete Maschinenlernmodell während der Feldbearbeitung für die aktuelle Feldbearbeitung und/oder zukünftige Feldbearbeitungen und/oder nach der Feldbearbeitung für zukünftige Feldbearbeitungen basierend auf den Bilddaten und/oder den Ergebnissen der kolorimetrischen Analyseroutine 11 und/oder der 3D-Analyseroutine 12 konfiguriert und/oder nachtrainiert.

Demnach sind grundsätzlich zwei Ansätze zum Nachtrainieren denkbar. Einerseits kann schon während der Feldbearbeitung in gewissem Umfang nachtrainiert werden. Hier und vorzugsweise werden dafür unterschiedliche Bilddaten mit einem Qualitätsindikator, insbesondere einem Qualitätsindikator der jeweils anderen Analyseroutine, verknüpft. Denkbar ist auch, insbesondere während der noch zu erläuternden Initialisierungsroutine, unterschiedliche Konfigurationsparameter durchzuprobieren und die jeweils resultierenden Qualitätsindikatoren zu ermitteln und auf dieser Basis in moderatem Umfang schon auf dem Feld das Maschinenlernmodell an die lokalen Gegebenheiten anzupassen.

Andererseits ist ebenfalls denkbar, dass Daten der Feldbearbeitung aufgezeichnet werden und nachträglich oder parallel beispielsweise in einer Cloud-Umgebung das Maschinenlernmodell nachtrainiert wird. Somit kann über mehrere Feldbearbeitungen eine Anpassung an die lokalen Gegebenheiten erfolgen.

Weiter ist hier und vorzugsweise vorgesehen, dass die Lernroutine eine Initialisierungsroutine umfasst, in der die Steuereinheit 4 die Kolorimetrie-Konfigurationsparameter und/oder die 3D-Konfigurationsparameter an ein neues Feld oder neue Feldbedingungen anpasst, und/oder, dass die Lernroutine eine fortlaufend durchgeführte Routine umfasst, die insbesondere zyklisch und/oder triggerbasiert durchgeführt wird.

Die vorliegend zur Lernroutine beschriebenen Bestandteile der Lernroutine können im Rahmen der vorschlagsgemäßen Lehre jeweils wahlweise der Initialisierungsroutine und/oder der fortlaufend durchgeführten Routine zugeordnet sein. Ein möglicher Trigger ist beispielsweise das Sinken eines Qualitätsindikators unter eine bestimmte Schwelle.

In einer bevorzugten Variante verhält es sich so, dass die Steuereinheit 4 in der Initialisierungsroutine eine Ermittlung einer Reihenstruktur des Feldbestandes 5, insbesondere templatebasiert, durchführt und/oder eine Ist-Kamerahöhe und/oder einen Ist-Kamerawinkel ermittelt, und/oder, dass die Steuereinheit 4 in der Initialisierungsroutine Konfigurationsparameter eines Templates 13 für die Reihenerkennung ermittelt.

Zusätzlich kann die Steuereinheit 4 aus der Ist-Kamerahöhe und/oder dem Ist-Kamerawinkel im Rahmen der Lernroutine eine Soll-Kamerahöhe und einen Soll-Kamerawinkel ermitteln und vorzugsweise automatisch einstellen.

Wie bereits angesprochen kann die Steuereinheit 4 in der Lernroutine eine Separationsfunktion 14 zur Unterscheidung zwischen zumindest Pflanzenpixeln und Bodenpixeln konfigurieren und/oder auswählen. Beispielhaft zeigt Fig. 3, wie eine Separation mittels einer Separationsfunktion 14 in drei Gruppen aussehen kann. Die Steuereinheit 4 kann die Konfiguration und/oder Auswahl der Separationsfunktion 14 hinsichtlich eines Qualitätsindikators der Reihenerkennung, insbesondere der 3D-Analyseroutine 12, optimieren.

Die Separationsfunktion 14 kann auf einem trainierten Maschinenlernmodell basieren, das automatisch oder über Benutzerfeedback nach der Feldbearbeitung nachtrainiert wird.

Üblicherweise werden Separationsfunktionen 14 hinsichtlich eines inhärenten Fehlermaßes, beispielsweise eines Root-Mean-Square-Wertes bewertet. Vorliegend kann in vielen Fällen stattdessen die dreidimensionale Reihenerkennung als Goldstandard genutzt werden, um die Separationsfunktion 14 auszuwählen oder zu konfigurieren.

Eine Möglichkeit, die Separationsfunktion 14 auszuwählen oder zu konfigurieren ist, dass Pixel mit klarer Klassifikation "in der Reihe" und "Boden" statistisch hinsichtlich ihrer Spektralcharakteristik ausgewertet werden. Liegen hinreichend viele Daten vor, kann die Separationsfunktion 14 angepasst werden oder aus mehreren robusten Separationsfunktionen 14 wird die geeignetste ausgewählt. Die Klassifikation zwischen beispielhaft "in der Reihe" und "Boden" kann durch eine Kombination von eindeutigen Farben und der dreidimensionalen Reihenerkennung erfolgen.

Weiter ist hier und vorzugsweise vorgesehen, dass die Steuereinheit 4 in der Lernroutine eine Auswahl und/oder Konfiguration einer Separationsfunktion 14 einer vorherigen Feldbearbeitung, insbesondere GPS-basiert, abruft und basierend auf der abgerufenen Auswahl und/oder Konfiguration die Separationsfunktion 14 auswählt und/oder konfiguriert.

Farbräume von Nutzpflanzen, Unkraut und Boden sind abhängig von der Aussaatzeit, der Jahreszeit, dem Ort und dergleichen. Es kann vorgesehen sein, das Lernverfahren in Abhängigkeit von der Zeit, insbesondere der Jahreszeit, durchzuführen. Ebenso kann vorgesehen sein, das Lernverfahren, insbesondere die Lernroutine, auf einem Feld abhängig von Feldregionen durchzuführen und/oder die Feldregionen während der Lernroutine zu lernen und vorzugsweise über mehrere Feldbearbeitungen zu verfeinern. Nach einigen Feldbearbeitungen kann dann auch unter schweren Bedingungen beispielsweise bei hohem Unkraut oder schlechtem Licht eine robuste Reihenerkennung ermöglicht werden. Die Feldregionen können GPS-basiert ermittelt und/oder gespeichert und/oder abgerufen werden.

Weiter ist hier und vorzugsweise vorgesehen, dass die Steuereinheit 4 die Separationsfunktion 14 in der Lernroutine fruchtartenspezifisch und/oder sortenspezifisch und/oder bodenartenspezifisch und/oder unkrautspezifisch auswählt.

Es kann vorgesehen sein, dass in dem Lernverfahren Konfigurationsparameter optimiert werden, die Kolorimetrie-Konfigurationsparameter und 3D-Konfigurationsparameter sind und/oder Konfigurationsparameter, die nur Kolorimetrie-Konfigurationsparameter oder nur 3D-Konfigurationsparameter sind.

Manche Konfigurationsparameter beeinflussen aufgrund der Doppelnutzung der Optiken 8 notwendigerweise beide Analyseroutinen. Andere, insbesondere die Konfigurationsparameter, die die nachträgliche Auswertung betreffen, beeinflussen nur eine der Analyseroutinen.

Ebenfalls denkbar ist, dass die Kolorimetrie-Konfigurationsparameter und/oder die 3D-Konfigurationsparameter hardwareseitige und/oder softwareseitige Konfigurationsparameter umfassen, vorzugsweise, dass die Kolorimetrie-Konfigurationsparameter eine Belichtung einer und/oder beider Optiken 8 und/oder eine Separationsfunktion 14 und/oder Konfigurationsparameter einer Separationsfunktion 14 umfassen, und/oder, dass die 3D-Konfigurationsparameter eine Höhe und/oder einen Winkel einer oder beider Optiken 8 des Kamerasystems 7 umfassen.

Weiter ist hier und vorzugsweise vorgesehen, dass zumindest zeitweise unterschiedliche Belichtungseinstellungen an den beiden Optiken 8 eingestellt werden, vorzugsweise, dass die Steuereinheit 4 in der Lernroutine die Belichtungseinstellungen der Optiken 8 variiert, um die Kolorimetrie-Konfigurationsparameter zu optimieren.

Grundsätzlich sind Belichtungsreihen zur Verbesserung der Kolorimetrie vorteilhaft, jedoch aufwändig. Durch die unterschiedliche Belichtung der beiden Optiken 8 werden während der Feldbearbeitung mehr Farbdaten gewonnen als bei gleichen Belichtungseinstellungen. Auch Belichtungsreihen können so doppelt so schnell durchgeführt werden.

Vorgeschlagen wird außerdem ein Kamerasystem 7 eingerichtet zur Verwendung in dem vorschlagsgemäßen Verfahren.

Auf alle Ausführungen zu dem vorschlagsgemäßen Verfahren darf verwiesen werden.

Vorgeschlagen wird außerdem eine landwirtschaftliche Arbeitsmaschine 1 eingerichtet zur Verwendung in dem vorschlagsgemäßen Verfahren.

Auf alle Ausführungen zu dem vorschlagsgemäßen Verfahren darf verwiesen werden.

### Bezugszeichenliste

- 1: landwirtschaftliche Arbeitsmaschine
- 2: Arbeitsaggregat
- 3: Anbaugerät
- 4: Steuereinheit
- 5: Feldbestand
- 6: Reihen
- 7: Kamerasystem
- 8: Optik
- 9: Befestigungselement
- 10: Linearaktor
- 11: kolorimetrische Analyseroutine
- 12: 3D-Analyseroutine
- 13: Template
- 14: Separationsfunktion

## Patentansprüche

1. Verfahren zur optimierten Konfiguration eines Kamerasystems (7) zur Reihenerkennung in einem Feldbestand (5) während einer Feldbearbeitung, wobei die Feldbearbeitung mittels einer landwirtschaftlichen Arbeitsmaschine (1) durchgeführt wird, wobei die landwirtschaftliche Arbeitsmaschine (1) ein Arbeitsaggregat (2) zur reihenabhängigen Feldbearbeitung aufweist und/oder mit einem landwirtschaftlichen Anbaugerät (3) zur reihenabhängigen Feldbearbeitung verbunden ist,
wobei ein Kamerasystem (7) zur Aufnahme von Bilddaten vorgesehen ist, wobei das Kamerasystem (7) mindestens zwei Optiken (8) zur 3D-Erfassung des Feldbestandes (5) aufweist,
wobei eine Steuereinheit (4) vorgesehen ist, wobei die Steuereinheit (4) die Bilddaten des Kamerasystems (7) in einer Reihenerkennungsroutine analysiert, wobei die Reihenerkennungsroutine eine kolorimetrische Analyseroutine (11) umfasst, wobei die Analyseroutine eine 3D-Analyseroutine (12) umfasst,
wobei die kolorimetrische Analyseroutine (11) durch Kolorimetrie-Konfigurationsparameter an lokale Feldbedingungen anpassbar ist und
wobei die 3D-Analyseroutine (12) durch 3D-Konfigurationsparameter an lokale Feldbedingungen anpassbar ist
**dadurch gekennzeichnet,**
**dass** während der Feldbearbeitung Ergebnisse der kolorimetrischen Analyseroutine (11) und der 3D-Analyseroutine (12) zur Reihenerkennung kombiniert werden und
**dass** die Kolorimetrie-Konfigurationsparameter und/oder die 3D-Konfigurationsparameter während der Feldbearbeitung und/oder über verschiedene Feldbearbeitungen mittels eines Lernverfahrens optimiert werden.

2. Verfahren nach Anspruch 1, **dadurch gekennzeichnet, dass** in dem Lernverfahren die Steuereinheit (4) eine Lernroutine durchführt, in der die Steuereinheit (4) die Kolorimetrie-Konfigurationsparameter und/oder die 3D-Konfigurationsparameter optimiert, vorzugsweise, dass in der Lernroutine die Kolorimetrie-Konfigurationsparameter basierend auf Ergebnissen der 3D-Analyseroutine (12) optimiert werden, und/oder, dass in der Lernroutine die 3D-Konfigurationsparameter basierend auf Ergebnissen der kolorimetrische Analyseroutine (11) optimiert werden.

3. Verfahren nach Anspruch 1 oder 2, **dadurch gekennzeichnet, dass** die Steuereinheit (4) in der Lernroutine ein trainiertes Maschinenlernmodell verwendet, um die Kolorimetrie-Konfigurationsparameter und/oder die 3D-Konfigurationsparameter zu optimieren, und/oder, dass die Steuereinheit (4) in der kolorimetrischen Analyseroutine (11) und/oder der 3D-Analyseroutine (12) ein trainiertes Maschinenlernmodell verwendet, um die Ergebnisse zu ermitteln.

4. Verfahren nach Anspruch 3, **dadurch gekennzeichnet, dass** das in der kolorimetrischen Analyseroutine (11) und/oder der 3D-Analyseroutine (12) verwendete Maschinenlernmodell während der Feldbearbeitung für die aktuelle Feldbearbeitung und/oder zukünftige Feldbearbeitungen und/oder nach der Feldbearbeitung für zukünftige Feldbearbeitungen basierend auf den Bilddaten und/oder den Ergebnissen der kolorimetrischen Analyseroutine (11) und/oder der 3D-Analyseroutine (12) konfiguriert und/oder nachtrainiert wird.

5. Verfahren nach einem der Ansprüche 2 bis 4, **dadurch gekennzeichnet, dass** die Lernroutine eine Initialisierungsroutine umfasst, in der die Steuereinheit (4) die Kolorimetrie-Konfigurationsparameter und/oder die 3D-Konfigurationsparameter an ein neues Feld oder neue Feldbedingungen anpasst, und/oder, dass die Lernroutine eine fortlaufend durchgeführte Routine umfasst, die insbesondere zyklisch und/oder triggerbasiert durchgeführt wird.

6. Verfahren nach Anspruch 5, **dadurch gekennzeichnet, dass** die Steuereinheit (4) in der Initialisierungsroutine eine Ermittlung einer Reihenstruktur des Feldbestandes (5) durchführt und/oder eine Ist-Kamerahöhe und/oder einen Ist-Kamerawinkel ermittelt, und/oder, dass die Steuereinheit (4) in der Initialisierungsroutine Konfigurationsparameter eines Templates (13) für die Reihenerkennung ermittelt.

7. Verfahren nach einem der Ansprüche 2 bis 6, **dadurch gekennzeichnet, dass** die Steuereinheit (4) in der Lernroutine eine Separationsfunktion (14) zur Unterscheidung zwischen zumindest Pflanzenpixeln und Bodenpixeln konfiguriert und/oder auswählt, vorzugsweise, dass die Steuereinheit (4) die Konfiguration und/oder Auswahl der Separationsfunktion (14) hinsichtlich eines Qualitätsindikators der Reihenerkennung, insbesondere der 3D-Analyseroutine (12), optimiert.

8. Verfahren nach Anspruch 7, **dadurch gekennzeichnet, dass** die Steuereinheit (4) in der Lernroutine eine Auswahl und/oder Konfiguration einer Separationsfunktion (14) einer vorherigen Feldbearbeitung, insbesondere GPS-basiert, abruft und basierend auf der abgerufenen Auswahl und/oder Konfiguration die Separationsfunktion (14) auswählt und/oder konfiguriert.

9. Verfahren nach Anspruch 7 oder 8, **dadurch gekennzeichnet, dass** die Steuereinheit (4) die Separationsfunktion (14) in der Lernroutine fruchtartenspezifisch und/oder sortenspezifisch und/oder bodenartenspezifisch und/oder unkrautspezifisch auswählt.

10. Verfahren nach einem der vorhergehenden Ansprüche, **dadurch gekennzeichnet, dass** in dem Lernverfahren Konfigurationsparameter optimiert werden, die Kolorimetrie-Konfigurationsparameter und 3D-Konfigurationsparameter sind und/oder Konfigurationsparameter, die nur Kolorimetrie-Konfigurationsparameter oder nur 3D-Konfigurationsparameter sind.

11. Verfahren nach einem der vorhergehenden Ansprüche, **dadurch gekennzeichnet, dass** die Kolorimetrie-Konfigurationsparameter und/oder die 3D-Konfigurationsparameter hardwareseitige und/oder softwareseitige Konfigurationsparameter umfassen, vorzugsweise, dass die Kolorimetrie-Konfigurationsparameter eine Belichtung einer und/oder beider Optiken (8) und/oder eine Separationsfunktion (14) und/oder Konfigurationsparameter einer Separationsfunktion (14) umfassen, und/oder, dass die 3D-Konfigurationsparameter eine Höhe und/oder einen Winkel einer oder beider Optiken (8) des Kamerasystems (7) umfassen.

12. Verfahren nach einem der vorhergehenden Ansprüche, **dadurch gekennzeichnet, dass** zumindest zeitweise unterschiedliche Belichtungseinstellungen an den beiden Optiken (8) eingestellt werden, vorzugsweise, dass die Steuereinheit (4) in der Lernroutine die Belichtungseinstellungen der Optiken (8) variiert, um die Kolorimetrie-Konfigurationsparameter zu optimieren.

13. Kamerasystem eingerichtet zur Verwendung in dem Verfahren nach einem der Ansprüche 1 bis 12.

14. Landwirtschaftliche Arbeitsmaschine eingerichtet zur Verwendung in dem Verfahren nach einem der Ansprüche 1 bis 12.
